# EUROPEAN PATENT APPLICATION

(11) **EP 3 579 154 A1**
(43) Date of publication of application: **11.12.2019**
(21) Application number: 18175959.8
(22) Date of filing: 05.06.2018
(51) Int. Cl.: G06N 99/00, G06N 3/08

(54) **REINFORCEMENT LEARNING FOR USER BEHAVIOUR**

(71) Applicant: Nokia Technologies Oy, 02610 Espoo (FI)
(72) Inventor: BAYKANER, Khan, Upper Cambourne, Cambridgeshire CB23 6BL (GB)
(74) Representative: Potter Clarkson

(57) **Abstract**

A computer-implemented method comprising: using one or more synthetic user models to train a particular reinforcement learning agent, each of the one or more synthetic user models comprising a behaviour function and a response generation function, wherein a reinforcement learning agent is configured to produce an output action based on an input state to the reinforcement learning agent, a behaviour function is configured to model a response to different output actions produced by a reinforcement learning agent, and a response generation function is configured to use a behaviour function to generate a response to an output action produced by a reinforcement learning agent, and wherein the training comprises, for each of the one or more synthetic user models: the particular reinforcement learning agent producing an output action based on a current input state; the response generation function of the synthetic user model using the behaviour function of the synthetic user model to generate a response to the output action; appropriately updating the particular reinforcement learning agent based on the response; and iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and providing the particular trained reinforcement learning agent as an output for use by a user application.

## Description

### Technical Field

The present disclosure relates to methods, apparatus, systems and computer programs for training reinforcement learning algorithms.

### Background

It can be desirable for a computer system to learn from a user's behaviour in order to improve the actions taken by the computer system. Reinforcement learning (RL) provides one method of learning from a user's behaviour.

The listing or discussion of a prior-published document or any background in this specification should not necessarily be taken as an acknowledgement that the document or background is part of the state of the art or is common general knowledge.

### Summary

According to a first aspect, there is provided a computer-implemented method comprising
training a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state,
   - the response generation function of the synthetic user model using the behaviour function of the synthetic user model to generate a response to the output action,
   - appropriately updating the particular reinforcement learning agent based on the response, and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

The method may further comprise:
following the training, testing the particular reinforcement learning agent using one more synthetic test users, each of the one or more synthetic test users comprising a test behaviour function and a test response generation function,
wherein the testing comprises, for each of the one or more synthetic test users:
   - the particular reinforcement learning agent producing an output action based on a current input state,
   - the test response generation function of the synthetic test user using the test behaviour function of the synthetic test user to generate a response to the output action,
   - determining a reward value resulting from the response to the output action, and
   - iteratively repeating the producing an output action, generating a response and determining a reward value steps, wherein for each subsequent iteration the particular reinforcement learning agent takes as an input state the test response generation function's response from the previous iteration in order to determine the output action to produce, and
evaluating the particular reinforcement learning agent using one or more of the determined reward values.

The method may further comprise:
following the training on one or more synthetic user models, and optionally following the testing on one or more synthetic test users, further training the particular reinforcement learning agent using one or more real users by, for each of the one or more real users:
- the particular reinforcement learning agent producing an output action based on a current input state;
- the real user producing a response to the output action;
- appropriately updating the reinforcement learning agent based on the user's response; and
- iteratively repeating the producing an output action, producing a response and updating the particular reinforcement learning agent steps, wherein for each subsequent iteration the particular reinforcement learning agent takes as an input state the real user's response from the previous iteration in order to determine the output action to produce.

The method may further comprise
following the training on one or more synthetic user models, and optionally following the testing on one or more synthetic test users, and optionally following the training on one or more real users, further testing the particular reinforcement learning agent using one or more real users by, for each of the one or more real users:
   - the particular reinforcement learning agent producing an output action based on a current input state;
   - the real user producing a response to the output action;
   - determining a reward value resulting from the real user's response; and
   - iteratively repeating the producing an output action, producing a response and determining a reward value, wherein for each subsequent iteration the particular reinforcement learning agent takes as an input state the real user's response from the previous iteration in order to determine the output action to produce; and
evaluating the particular reinforcement learning agent using one or more of the determined reward values.

Testing the particular reinforcement learning agent using one or more synthetic test users may further comprise:
appropriately updating the reinforcement learning agent based on the response generated by the test response generation function,
wherein the iteratively repeating step includes iteratively repeating the updating the reinforcement learning agent step.

Similarly, testing the particular reinforcement learning agent using one or more real users may further comprise:
appropriately updating the reinforcement learning agent based on the real user's response,
wherein the iteratively repeating step includes iteratively repeating the updating the reinforcement learning agent step.

Evaluating the reinforcement learning agent may comprises determining one or more of: a reward value for the final iteration; an average reward value over a plurality of iterations; a cumulative reward value for a plurality of iterations; a weighted cumulative reward value for a plurality of iterations; an average percentage increase in reward value per iteration; the percentage of iterations for which the reward value was over a threshold reward value; and the number of iterations after which the reward value was over a threshold for at least a certain number of iterations in a row. A plurality of iterations may be all iterations. A plurality of iterations may be the final N iterations.

The method may further comprise:
training a plurality of reinforcement learning agents, in accordance with the training step described above;
testing and evaluating the plurality of reinforcement learning agents in accordance with testing and evaluating steps described above; and
determining at least one preferred reinforcement learning agent,
wherein providing the particular trained reinforcement learning agent for use by a user application comprises providing the determined at least one preferred reinforcement learning agent.

A response generation function may comprise a mapping between a control variable and a response variable. Training the reinforcement learning agent may further comprise converting the output action produced by the reinforcement learning agent in a control variable value using the behaviour function. The response generation function may use the control variable value and the mapping to determine the response produced.

The one or more synthetic user models may comprise at least two synthetic user models. The at least two synthetic user models may comprise the same response generation function and different respective behaviour functions.

The at least two synthetic user models may comprise the same response generation function and the same behaviour function, with the response generation function having different parameters for the respective synthetic user models. The parameters of the response generation function may comprise one or more of: a temporal parameter, user descriptors and context descriptors.

The reinforcement learning agent may be for use in a digital health setting of the user application. The reinforcement learning agent may be for use to monitor activity levels of a user, for example as measured by number of steps taken.

The reinforcement learning agent may be for use with an electronic device to learn which applications a user is likely to use on the electronic device at a given time. This may be used to decrease loading times for applications or to decrease battery consumption.

In a second aspect, there is provided an apparatus configured to:
train a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state;
   - the response generation function of the synthetic user model using the behaviour function of the synthetic user model to generate a response to the output action;
   - appropriately updating the particular reinforcement learning agent based on the response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
provide the particular trained reinforcement learning agent as an output for use by a user application.

In a third aspect, there is provided an apparatus comprising means for performing:
training a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state;
   - the response generation function of the synthetic user model using the behaviour function of the synthetic user model to generate a response to the output action;
   - appropriately updating the particular reinforcement learning agent based on the response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

In a fourth aspect, there is provided an apparatus comprising:
circuitry configured to train a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state;
   - the response generation function of the synthetic user model using the behaviour function of the synthetic user model to generate a response to the output action;
   - appropriately updating the particular reinforcement learning agent based on the response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
circuitry configured to provide the particular trained reinforcement learning agent as an output for use by a user application.

For each of the second, third and fourth aspects, the apparatus may comprise:
at least one processor; and
at least one memory including computer program code;
with the at least one memory and the computer program code configured to, with the at least one processor, cause the apparatus at least to perform the training and providing steps described above.

In a fifth aspect, there is provided a system configured to
train a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state;
   - the response generation function of the synthetic user model using the behaviour function of the synthetic user model to generate a response to the output action;
   - appropriately updating the particular reinforcement learning agent based on the response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
provide the particular trained reinforcement learning agent as an output for use by a user application.

The steps of any method disclosed herein do not have to be performed in the exact order disclosed, unless explicitly stated or understood by the skilled person.

Corresponding computer programs for implementing one or more steps of the methods disclosed herein are also within the present disclosure and are encompassed by one or more of the described examples.

For example, in a sixth aspect, there is provided a computer program configured to, when run on at least one processor, cause an apparatus or system to perform:
training a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state;
   - the response generation function using the behaviour function to generate a response to the output action;
   - appropriately updating the particular reinforcement learning agent based on the response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

In a seventh aspect, there is provided a computer-readable medium having stored thereon computer program code configured to, when run on at least one processor, cause an apparatus or system to perform:
training a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state;
   - the response generation function of the synthetic user model using the behaviour function of the synthetic user model to generate a response to the output action;
   - appropriately updating the particular reinforcement learning agent based on the response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

One or more of the computer programs may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, may be a non-transitory medium, or may be embodied as a transient signal. Such a transient signal may be a network download, including an internet download.

According to an eighth aspect, there is provided a computer-implemented method comprising
training a particular reinforcement learning agent using one or more synthetic user models, each of the one or more synthetic user models comprising a behaviour function and a response generation function, wherein the training comprises, for each of the one or more synthetic user models:
   - the particular reinforcement learning agent producing an output action based on a current input state to the particular reinforcement learning agent,
   - the response generation function using the behaviour function to generate a response to the output action produced by the particular reinforcement learning agent, wherein the behaviour function is configured to model a response to different output actions produced by the particular reinforcement learning agent,
   - appropriately updating the particular reinforcement learning agent based on the response, and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

According to a ninth aspect, there is provided an apparatus comprising means for performing:
training a particular reinforcement learning agent using one or more synthetic user models, each of the one or more synthetic user models comprising a behaviour function and a response generation function, wherein the training comprises, for each of the one or more synthetic user models:
   - the particular reinforcement learning agent producing an output action based on a current input state to the particular reinforcement learning agent;
   - the response generation function using the behaviour function to generate a response to the output action produced by the particular reinforcement learning agent, wherein the behaviour function is configured to model a response to different output actions produced by the particular reinforcement learning agent
   - appropriately updating the particular reinforcement learning agent based on the
      response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

According to a tenth aspect, there is provided a computer-readable medium having stored thereon computer program code configured to, when run on at least one processor, cause an apparatus or system to perform:
training a particular reinforcement learning agent using one or more synthetic user models, each of the one or more synthetic user models comprising a behaviour function and a response generation function, wherein the training comprises, for each of the one or more synthetic user models:
   - the particular reinforcement learning agent producing an output action based on a current input state to the particular reinforcement learning agent;
   - the response generation function using the behaviour function to generate a response to the output action produced by the particular reinforcement learning agent, wherein the behaviour function is configured to model a response to different output actions produced by the particular reinforcement learning agent
   - appropriately updating the particular reinforcement learning agent based on the
      response; and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

According to an eleventh aspect, there is provided a computer-implemented method comprising
training a particular reinforcement learning agent using one or more synthetic user models, each of the one or more synthetic user models comprising a behaviour function and a response generation function, wherein
   - a reinforcement learning agent is configured to produce an output action based on an input state to the reinforcement learning agent, wherein the reinforcement learning agent seeks to produce the optimum output action which maximises a reward value arising from a response to the output action,
   - a behaviour function is configured to model a response to different output actions produced by a reinforcement learning agent, and
   - a response generation function is configured to use a behaviour function to generate a response to an output action produced by a reinforcement learning agent, and
wherein the training comprises, for each of the one or more synthetic user models:
   - the particular reinforcement learning agent producing an output action based on a current input state,
   - the response generation function of the synthetic user model using the behaviour function of the synthetic user model to generate a response to the output action,
   - appropriately updating the particular reinforcement learning agent based on the response, and
   - iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

The present disclosure includes one or more corresponding aspects, examples or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

### Brief Description of the Figures

Some example embodiments will now be described with reference to the accompanying drawings, in which:
Figure 1 shows an example apparatus according to the present disclosure;
Figure 2 illustrates another example apparatus according to the present disclosure;
Figure 3 illustrates a further example apparatus according to the present disclosure;
Figure 4 illustrates schematically an example synthetic user model according to the present disclosure;
Figure 5 illustrates schematically an example synthetic test user according to the present disclosure;
Figure 6 illustrates an example of the operation of a reinforcement learning agent and a synthetic user model according to the present disclosure;
Figure 7 illustrates schematically steps of an example method of training a reinforcement agent using one or more synthetic user models according to the present disclosure.
Figure 8 schematically illustrates the method of Figure 7 applied in the context of a digital health coach according to an example of the present disclosure;
Figure 9 illustrates an example method of training and testing a reinforcement learning agent involving both synthetic users and real users according to the present disclosure;
Figure 10 illustrates an example method of training and testing a reinforcement learning agent involving both synthetic users and real users according to the present disclosure; and
Figure 11 shows an example computer-readable medium comprising a computer program configured to perform, control or enable the method of Figure 7.

### Description of Specific Examples

In some scenarios, it can be useful for a computer system to be able to learn from a user's actions/behaviours so that the computer system can take better actions when interacting with the user in the future. For example, it may be desirable to learn which of a group of website designs makes a user most likely to make a purchase so that in future the user can be presented with that website design. As another example, it may be desirable to learn how a user reacts to different prompts to exercise so that in future a digital health coach application can provide suitable prompts to increase the exercise done by the user. As another example, it may be desirable to learn which applications on a mobile phone a user is likely to use at different times so that in future loading times or battery consumption on the mobile phone can be optimised.

One technique for learning user behaviour involves reinforcement learning algorithms ('RL algorithms') and reinforcement learning agents ('RL agents') (i.e. instantiations of a reinforcement learning algorithm in code). However, there is a wide range of possible reinforcement learning algorithms, each with respective advantages and disadvantages (e.g. in terms of speed of convergence - how many iterations until a RL agent typically takes good actions or stability/convergence guarantees - how likely it is that a RL agent will eventually learn to take good actions). It is difficult to know in advance which algorithm will perform well for particular scenarios.

In some reinforcement learning scenarios, it is possible to perform extensive testing to evaluate how suitable particular RL algorithms are. In some scenarios (e.g. computer game testing or simulated robotic control), a simulator model may be available and can be used to test particular RL algorithms. For scenarios involving user behaviour, however, no such simulators are available. Additionally, it is generally difficult or unfeasible to carry out extensive experiments with users, e.g. because of the financial cost, the time required, for safety reasons (providing bad health advice can be harmful to users) or because it may damage the reputation of the product. This presents the problem of how to identify suitable RL algorithms for scenarios involving user behaviour.

The present disclosure uses one or more synthetic user models to train a RL agent in accordance with the method of Claim 1, with a synthetic user model comprising a behaviour function and a response generation function. In this way, the RL agent can be extensively trained on one or more (synthetic) users without requiring a simulator model or numerous real users.

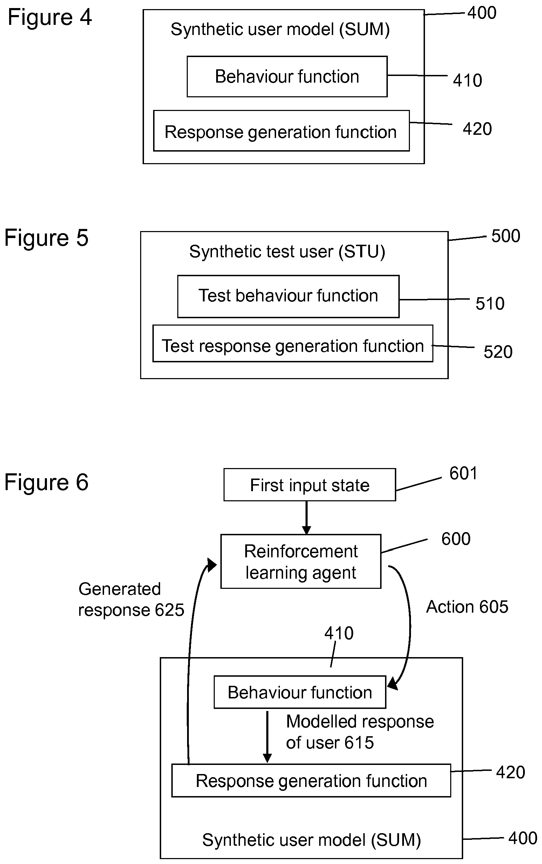

In some example embodiments, the trained RL agent can then be tested on one or more synthetic test users and its performance evaluated. In some embodiments, a preferred RL agent can then be trained and/or tested on one or more real users. Synthetic user models and synthetic test users are discussed further below and illustrated schematically in Figures 4 and 5.

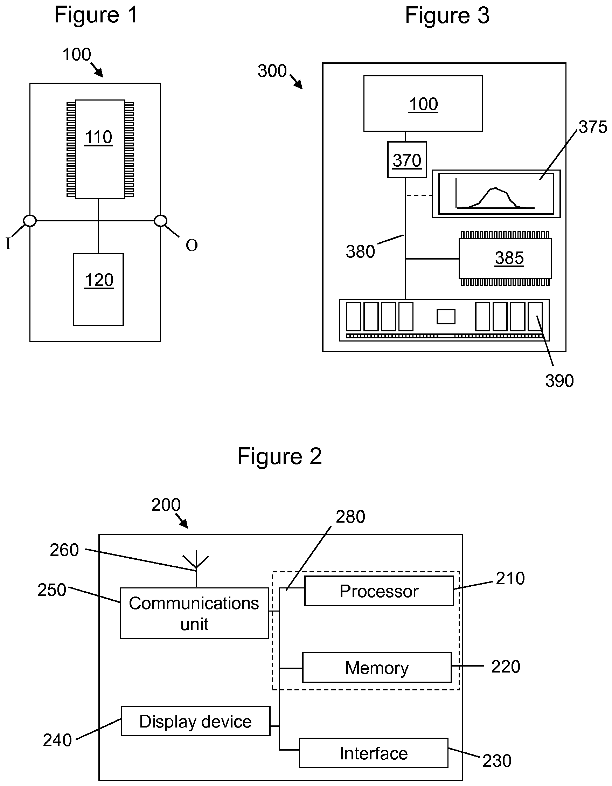

Figure 1 shows an apparatus 100 comprising a processor 110, memory 120, input I and output O. In this example only one processor and one memory are shown but it will be appreciated that other examples may utilise more than one processor and/or more than one memory (e.g. same or different processor/memory types). The apparatus 100 may be or may comprise an application specific integrated circuit (ASIC). The apparatus 100 may be or may comprise a field-programmable gate array (FPGA). The apparatus 100 may be a module for a device, a circuitry for the device, or may be the device itself, wherein the processor 110 is a general purpose CPU (Central Processing Unit) and the memory 120 comprises one or more memory units. Alternatively or additionally, the apparatus 100 may comprise one or more GPUs (Graphics Processing Unit), NPUs (Neural Network Processing Unit) and/or AI (Artificial Intelligence) accelerators.

The input I allows for receipt of signalling to the apparatus 100 from further components. The signalling may represent a daily target activity level for the user, or may represent a user daily activity profile, for example. The output O allows for onward provision of signalling from the apparatus 100 to further components. For example, an adjusted user daily activity profile may be output. In this example the input I and output O are part of a connection bus that allows for connection of the apparatus 100 to further components. The processor 110 is dedicated to executing/processing information received via the input I in accordance with instructions stored in the form of one or more computer program code on the memory 120. The output signalling generated by such operations from the processor 110 is provided onwards to further components via the output O.

The memory 120 unit is a computer readable medium (such as solid state memory, a hard drive, ROM (Read-Only Memory), RAM (Random-Access Memory), Flash or other memory) that stores computer program code. This computer program code stores instructions that are executable by the processor 110, when the program code is run on the processor 110. The internal connections between the memory 120 and the processor 110 can be understood to provide active coupling between the processor 110 and the memory 120 to allow the processor 110 to access the one or more computer program code stored on the memory 120.

In this example the input I, output O, processor 110 and memory 120 are electrically connected internally to allow for communication between the respective components I, O, 110, 120, which may be located proximate to one another as an ASIC. In this way the components I, O, 110, 120 may be integrated in a single chip/circuit/circuitry for installation in an electronic device. In other examples, one or more or all of the components may be located separately (for example, throughout a portable electronic device such as devices 200, 300, or within a network such as a "cloud" and/or may provide/support other functionality).

One or more examples of the apparatus 100 can be used as a component for another apparatus as in Figure 2, which shows a variation of apparatus 100 incorporating the functionality of apparatus 100 over separate components. In other examples the device 200 may comprise apparatus 100 as a module (shown by the optional dashed line box), for a mobile phone or PDA or audio/video player or the like. Such a module, apparatus or device may just comprise a suitably configured memory 120 and processor 110.

The example apparatus/device 200 comprises a display 240 such as, a Liquid Crystal Display (LCD), e-Ink, or touch-screen user interface (like a tablet PC). The device 200 is configured such that it may receive, include, and/or otherwise access data. For example, device 200 comprises one or more communications units 250 (such as a receiver, transmitter, and/or transceiver), in communication with one or more antennas 260 for connection to a wireless network and/or a port (not shown). Device 200 comprises one or more memory units 220 for storing data, which may be received via the one or more antennas 260 or a user interface 230. The processor 210 may receive data from the user interface 230, from the one or more memory units 220, or from the one or more communications units 250. Data may be output to a user of device 200 via the display device 240, and/or any other output devices provided with apparatus. The processor 210 may also store the data for later user in the one or more memory units 220. The device contains components connected via communications bus 280.

The one or more communications units 250 can be, for example, a receiver, transmitter, and/or transceiver, that is in communication with the one or more antenna 260 for connecting to a wireless network and/or a port (not shown) for accepting a physical connection to a network, such that data may be received via one or more types of network. The communications (or data) bus 280 may provide active coupling between the processor 210 and the one or more memory units (or storage medium) 220 to allow the processor 210 to access the computer program code stored on the one or more memory units 220.

The one or more memory units 220 comprises computer program code in the same way as the memory 120 of apparatus 100, but may also comprise other data. The processor 210 may receive data from the user interface 230, from the one or more memory units 220, or from the one or more communications units 250. Regardless of the origin of the data, these data may be outputted to a user of device 200 via the display device 240, and/or any other output devices provided with apparatus. The processor 210 may also store the data for later user in the one or more memory units 220.

The device/apparatus 300 shown in Figure 3 may be an electronic device (including a tablet personal computer), a portable electronic device, a portable telecommunications device, a wearable electronic device, or a module for such a device. The apparatus 100 can be provided as a module for device 300, or even as a processor/memory for the device 300 or a processor/memory for a module for such a device 300. The device 300 comprises a processor 385 and a storage medium 390, which are electrically connected by a data bus 380. This data bus 380 can provide an active coupling between the processor 385 and the storage medium 390 to allow the processor 380 to access the computer program code.

The apparatus 100 in Figure 3 is electrically connected to an input/output interface 370 that receives the output from the apparatus 100 and transmits this to the device 300 via data bus 380. Interface 370 can be connected via the data bus 380 to a display 375 (touch-sensitive or otherwise) that provides information from the apparatus 100 to a user. Display 375 can be part of the device 300 or can be separate. The device 300 also comprises a processor 385 that is configured for general control of the apparatus 100 as well as the device 300 by providing signalling to, and receiving signalling from, other device components to manage their operation.

The storage medium 390 is configured to store computer code configured to perform, control or enable the operation of the apparatus 100. The storage medium 390 may be configured to store settings for the other device components. The processor 385 may access the storage medium 390 to retrieve the component settings in order to manage the operation of the other device components. The storage medium 390 may be a temporary storage medium such as a volatile random access memory. The storage medium 390 may also be a permanent storage medium such as a hard disk drive, a flash memory, or a nonvolatile random access memory. The storage medium 390 could be composed of different combinations of the same or different memory types.

As mentioned above, the present disclosure uses one or more synthetic user models to train a RL agent in accordance with the method of Claim 1, with a synthetic user model comprising a behaviour function and a response generation function. This allows the RL agent to be trained on a (synthetic) user without requiring a simulator model or numerous real users. In some embodiments, the trained RL agent can then be tested on synthetic test users and its performance evaluated. In some embodiments, a preferred RL agent can be then trained and/or tested on real users.

### Synthetic user models

Figure 4 schematically illustrates a synthetic user model (SUM) 400. Each synthetic user model 400 comprises a respective behaviour function 410 and a respective response generation function 420; these work together to give a synthetic approximation of a user which can interact with a reinforcement learning agent.

Figure 6 illustrates the iterative operation of a reinforcement learning agent 600 in combination with a synthetic user model 400. A reinforcement learning agent 600 is configured to produce an output action 605 based on an input state to the reinforcement learning agent 600. The reinforcement learning agent seeks to produce the optimum output action in order to maximise a reward value arising from a user's response to the output action. A behaviour function 410 is configured to model 615 a response (of a synthetic user) to different output actions 605 produced by a reinforcement learning agent 600. The behaviour function 410 provides a plausible model of how a user might respond to different output actions produced by the RL agent 600, allowing the response generation model 420 to generate a plausible response 625 to the output action 605. It will be appreciated that these definitions apply to all reinforcement learning agents and behaviour functions discussed in the present disclosure rather than specifically to the reinforcement learning agent 600 and behaviour function 410 discussed in relation to Figures 4 and 6.

Although it is not possible to know exactly how a user might react (i.e. a true behaviour function for a real user), it is possible to specify a reasonable behaviour function using existing domain knowledge. To continue the digital health coach example discussed earlier, it is possible to make general statements based on many factors, including factors relating to the context and/or status of a user. Example factors include the time of day, day of the week, season, weather, a user's motivation, a user's schedule, age, gender, physical fitness, socioeconomic status, profession, education, location, personal profile, and/or available equipment. General statements could include, for example, 'an activity target that is too high may be disheartening and thus ignored by the user' and 'an activity target that is too low may be easily met but not inspire the user to be more active than usual', and to specify a behaviour function that reflects these general statements.

One example behaviour function 410 could specify that if a RL agent 600 produces an activity target 605 which is:
(i) less than the user achieved the day before, the synthetic user will meet but not exceed the low steps target;
(ii) between 1 and 1.2 times the number of steps achieved the day before, the synthetic user will achieve the steps target;
(iii) between 1.2 and 1.4 times than the number of steps achieved the day before, the user will maintain the number of steps achieved the day before; and
(iv) more than 1.4 times the number of steps achieved the day before, the user will achieve fewer than the steps achieved the day before.

This simple behaviour function 410 is likely to be sufficient to allow synthetic training of the RL agent 600.

Many other behaviour functions 410 (e.g. having different parameters and/or different distributions) can be envisaged and are within the scope of the present disclosure. Another example behaviour function 410 involves a Gaussian distribution, with a step target within 1 standard deviation of the mean of the distribution having a positive effect on the number of steps taken and any targets beyond 1 standard deviation having a negative effect, with the negative effect being proportional to the distance between the steps target and the mean.

Some behaviour functions 410 could include a probability that the activity target prompt will be entirely ignored by the user. This could reflect the likelihood of a user not thinking about their activity level at all, for example if they have an important meeting that day or have not looked at the activity target. In this case, the number of steps achieved might decrease or could stay the same as the day before.

As mentioned above, the second part of each synthetic user model 400 is a respective response generation function 420. A response generation function 420 is configured to use a behaviour function 410 to generate a response 625 (from the synthetic user) to an output action 605 produced by a reinforcement learning agent 600. This corresponds to a real user actively responding to an action from the RL agent. The generated response 625 forms the input state to the RL agent 600 for a subsequent action/response iteration. It will again be appreciated that this definition applies to all response generation functions discussed in the present disclosure rather than specifically to the response generation function 420 discussed in relation to Figures 4 and 6.

Using the example behaviour function 410 given above, the response generation function 420 may determine that as the RL agent's prompted activity target was between 1 and 1.2 times the number of steps achieved the day before, the synthetic user will achieve the target, and thus the response generation function 420 will generate a plausible response which is at or around the target.

In generating the response, the response generation function may also take into account parameters such as temporal parameters (e.g. the time of day, day of the week, season), user descriptors (e.g. age, gender, attitude to exercise/health, profession) and contextual descriptors (e.g. current location of a user). For example, the response generated for a user living in a city with high car usage rates and limited pedestrian areas may be lower than for a user who does not own a car, even if the two users have the same behaviour function. Similarly, the response generated for a lorry driver may be lower than for a person who has a more active job or who is retired.

In some example embodiments, a control variable can be used as an intermediary between the behaviour function 410 and the response generation function 420, with the response generation function 420 comprising a mapping between the control variable and a response variable. The behaviour function 410 can model the response of a user to a particular action 605 of the RL agent 600 by outputting an increment, decrement or no change to the control variable 615. In other words, the output action 605 from the RL agent 600 is converted using the behaviour function 410 into a control variable value. The response generation function 420 can then use the incremented/decremented/unchanged control variable value in combination with the mapping between the control variable and the response variable to determine the response to generate 625.

In some example embodiments, the control variable can be considered as analogous to the 'motivation' of a user, with the behaviour function 410 being analogous to the effect of the RL agent's action on the motivation of the user and the response generation function 420 making use of the user's motivation to determine the response of the user.

In one example, the control variable could have a permissible range of 0 to 10 with a possible response range of 0 to 20,000 steps. The control variable values of 0 and 10 map to responses of 0 and 20,000 steps. The mapping relation in between could be any suitable mapping, e.g. a linear or a polynomial relation, and could be based on prior domain knowledge or existing user data. One example behaviour function 410 could specify that if a RL agent produces an activity target which is:
(i) less than the user achieved the day before, the control variable is decremented by 0.1;
(ii) between 1 and 1.2 times the number of steps achieved the day before, the control variable is incremented by 0.1;
(iii) between 1.2 and 1.4 times than the number of steps achieved the day before, the control variable is unchanged; and
(iv) more than 1.4 times the number of steps achieved the day before, the control variable is decremented by 0.1.

In some example embodiments, the behaviour function 410 can take the form of a lookup table that maps output actions produced by a reinforcement learning agent 600 to respective behaviour outputs as the respective modelled responses of the user. The response generation function 420 uses the behaviour function lookup table and the RL agent's output action 605 to determine the response 625 to generate. In other example embodiments, behaviour function 410 can comprise a specific behaviour function algorithm and a behaviour output module. The behaviour output module receives the output action 605 from the particular RL agent 600 and uses the specific behaviour function algorithm to produce a behaviour output as the modelled response of the user 615. In embodiments involving a control variable, the behaviour output can be an increment, decrement or no change to the control variable. The response generation function 420 receives and uses the behaviour output and a specific response generation function algorithm to produce the response to the RL agent's output action 605.

### Synthetic training

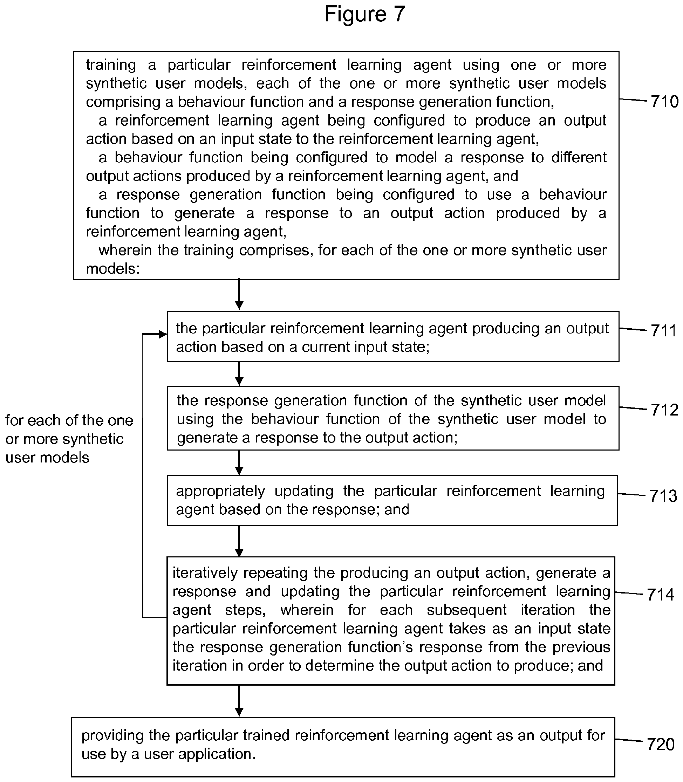

Figure 7 schematically illustrates the main steps of a method of training a particular reinforcement agent using one or more synthetic user models. Training a RL agent essentially involves running computational experiments with the RL agent and the one or more synthetic user models in order to generate data from which the RL agent can learn.

The method comprises training 710 a particular reinforcement learning agent 600 by performing an iterative method 711-714 for each of one or more synthetic user models 400. Firstly, the particular reinforcement learning agent 600 produces an output action 605 based on a current input state 711. For the first iteration, the current input state 601 could be a default state (e.g. average daily number of steps across the general population) or it could be based on past actions of the user (e.g. an average daily number of steps taken by the user over the past month). Secondly, the response generation function 420 uses the behaviour function 410 to generate a response 625 to the output action 712 (as described in the previous section). Thirdly, the particular reinforcement learning agent 600 is updated, as appropriate, based on the response 713. Updating comprises updating parameters of the RL agent. In some iterations, it may not be appropriate/necessary to update the RL agent, e.g. if the RL agent performed well in that iteration or if parameters are updated after every N iterations. Following this, further iterations of these steps occur 714. That is, (i) the updated RL agent 600 produces a second action 605, using the response generation function's response 625 from the first iteration as an input state in order to determine what second output action 605 to produce in order to try and maximise a reward value arising from the synthetic user model's response to the output action, followed by (ii) the response generation function generating a second response and (iii) the RL agent being updated for a second time, and so on. After some number of iterations, the RL agent will be expected to have converged (i.e. to have substantially finished learning and to have settled on a policy). The particular now-trained RL agent is provided, as an output, for use by a user application (e.g. a digital health coach application, a device performance optimisation application).

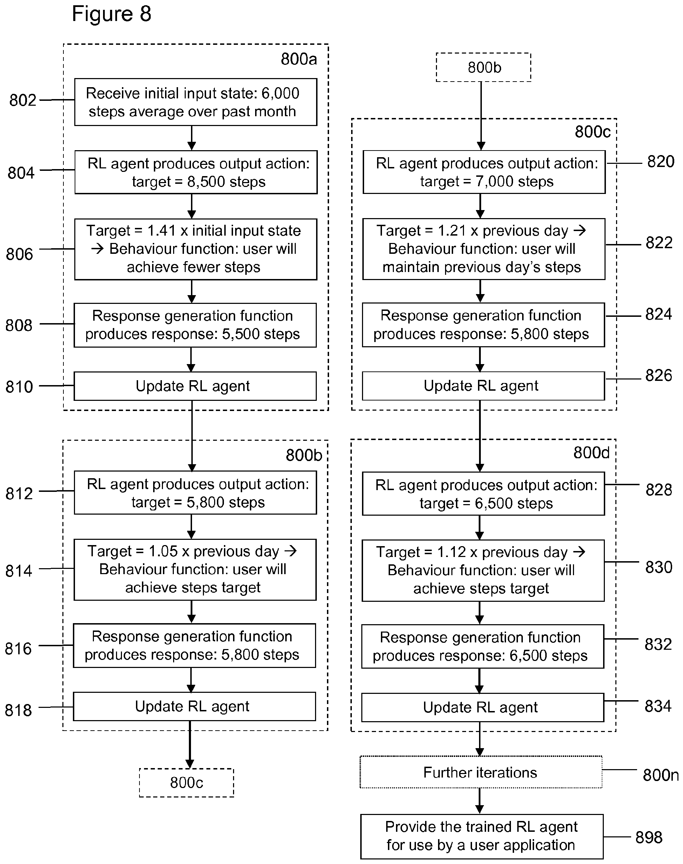

Figure 8 shows a schematic illustration of the method of Figure 7 applied in the context of a digital health coach. As previously discussed, an application having a digital health coach functionality may set an activity target for a user to aim for each day, in terms of a daily number of steps taken. The application seeks to provide an appropriate activity target (an 'action') in order to maximise the number of steps actually taken by the user (the 'reward'), given the number of steps taken on previous days (the 'input state'). However, it is difficult to know in advance which RL agent will perform well for this scenario (i.e. to determine what activity target is appropriate each day). Thus, the method of Figure 7 can be used to train a particular RL agent for use by the digital health coach functionality of the user application. This example uses a behaviour function which specifies that if a RL agent produces a steps target which is:
(i) less than the user achieved the day before, the synthetic user will meet but not exceed the low steps target;
(ii) between 1 and 1.2 times the number of steps achieved the day before, the synthetic user will achieve the steps target;
(iii) between 1.2 and 1.4 times than the number of steps achieved the day before, the user will maintain the number of steps achieved the day before; and
(iv) more than 1.4 times the number of steps achieved the day before, the user will achieve steps than achieved the day before.

Steps 802-810 cover the first action/response/updating iteration 800a. In step 802, the RL agent receives an initial input state which specifies that the average daily number of steps taken by the synthetic user over the past month is 6,000. In step 804, the RL agent produces the output action of setting a steps target for the synthetic user of 8,500 steps. In step 806, it is determined that this target is over 1.41 times the steps achieved in the initial input state (i.e. for the purposes of the behaviour function, 'the day before'). According to the behaviour function, this high a target is demotivating and the synthetic user will achieve fewer steps than achieved the day before. The behaviour function may specify how many fewer steps, e.g. approximately 500 steps fewer or approximately 10% fewer. In step 808, the response generation function generates a response of 5,500 steps. In step 810, the RL agent is updated to reflect the newly learnt information (e.g. that an increase of 41% appears to be too high to be effective or that when the current state is 6,000 steps, the synthetic user seems to respond negatively to a target of 8,500 steps).

Steps 812-818 cover the second action/response/updating iteration 800b. In step 812, the RL agent uses the input action of 5,500 steps (as generated by the response generation function in step 808) to produce an output action of setting a steps target of 5,800 steps. In step 814, it is determined that this target is approximately 1.05 times the steps achieved the day before. According to the behaviour function, the synthetic user will achieve the steps target, thus in step 816, the response generation function generates a response of 5,800 steps. In step 818, the RL agent is updated to reflect this newly learnt information (e.g. that an increase of 300 steps per day, from a base of 5,500 steps, appears achievable for the user).

Steps 820-826 cover the third action/response/updating iteration 800c. In step 820, the RL agent uses the input action of 5,800 steps (as generated by the response generation function in step 816) to produce an output action of setting a steps target of 7,000 steps. In step 822, it is determined that this target is approximately 1.21 times the steps achieved the day before. According to the behaviour function, this is neither a motivating or an unmotivating target, and the synthetic user will maintain the steps achieved on the previous day. Thus, in step 824, the response generation function generates a response of 5,800 steps. In step 826, the RL agent is updated to reflect this newly learnt information (e.g. that an increase of 21% has neither a positive not negative effect on the user).

Steps 828-834 cover the fourth action/response/updating iteration 800d. In step 828, the RL agent uses the input action of 5,800 steps (as generated by the response generation function in step 816) to produce an output action of setting a steps target of 6,500 steps. In step 830, it is determined that this target is approximately 1.12 times the steps achieved the day before. According to the behaviour function, this is a sufficiently motivating target and the synthetic user will achieve the steps target. Thus, in step 832, the response generation function generates a response of 6,500 steps. In step 834, the RL agent is updated to reflect this newly learnt information (e.g. that an increase of 12%, or of 700 steps from 5,800 steps, appears achievable for the user). Following step 834, multiple further iterations 800n could be performed, before the trained RL agent is provided (as an output of the method) for use by a user application 898.

By performing these multiple iterations until the RL agent 600 is expected to have converged, including updating the RL agent as appropriate, the RL agent should learn the behaviour function 410 of the synthetic user model 400. That is, for a user having the specified behaviour function 410, the RL agent should learn how to produce a suitable action which will maximise the number of steps taken by the user.

This training step can be carried out for multiple different synthetic user models 400 so that the RL agent learns the different behaviours of each of the multiple synthetic user models. The resultant RL agent, updated based on each of the multiple synthetic user models, is then more capable of adapting to new user behaviours.

In some embodiments, multiple different synthetic user models (e.g. two or more synthetic user models) can comprise the same response generation function and different respective behaviour functions. For example, a second synthetic user model could comprise a behaviour function similar to the example described above but with the ratios (1, 1.2, 1.4) altered to different (but still plausible) values. Other synthetic user models could each comprise a different Gaussian behaviour function. Each behaviour function could have a different mean, a different standard deviation, and/or have different widths of the Gaussian distribution corresponding to negative/positive responses.

In other embodiments, the multiple different synthetic user models could each comprise the same response generation function and the same behaviour function, but with the response generation function having different parameters for the respective synthetic user models. Example parameters include temporal parameters (e.g. the time of day, day of the week, season), user descriptors (e.g. age, gender, attitude to exercise/health, profession) and contextual descriptors (e.g. current location of a user). In one embodiment, a first response generation function includes parameters specifying that the user is more responsive to activity targets during the weekend than on a weekday. A second response generation function includes parameters specifying that the user is equally responsive to activity targets throughout the week (e.g. if the user is retired or works irregular shifts). Thus although the two synthetic users have the same response generation function and the same behaviour function, the different parameters for the response generation function identify them as two distinct synthetic users with different behaviour to learn.

### Synthetic testing

Following the synthetic training of a RL agent and prior to providing the trained RL agent for use by a user application, a synthetic testing stage can (optionally) be used to evaluate the performance of the trained RL agent at adapting to new user behaviours (e.g. to evaluate how quickly the RL agent adapts, or the stability of the RL agent, i.e. how reliably the RL agent converges on a sensible set of actions). The synthetic testing stage involves testing the trained RL agent on one or more new synthetic user models (herein called synthetic test users' (STU)) followed by evaluating the RL agent using one or more reward values resulting from the testing step.

A synthetic test user is essentially the same as a synthetic user model 400, other than that it is used to test the performance of an RL agent rather than solely to train the RL agent. As illustrated in Figure 5, a synthetic test user 500 comprises a test behaviour function 510 and a test response generation function 520; these work together to give a synthetic approximation of a test user which can interact with a RL agent. The paragraphs above relating to behaviour functions 410 and response generation functions 420 for synthetic user models 400 also apply to the test behaviour functions 510 and test response generation functions 520 for synthetic test users 500, as does Figure 6.

Testing the trained RL agent 600 using one more synthetic test users 500 comprises similar steps to the synthetic training of the RL agent 600, but without (necessarily) updating the RL agent and with the addition of a specific determining a reward value step for each iteration (with one or more of these reward values later being used in the evaluation step). The testing comprises, for each of the one or more synthetic test users 500:
- the trained RL agent 600 producing an output action 605 based on a current input state;
- the test response generation function 520 of the synthetic test user using the test behaviour function 510 of the synthetic test user to generate a response 625 to the output action;
- determining a reward value resulting from the response to the output action; and
- iteratively repeating the producing an output action, generating a response and determining a reward value agent steps, wherein for each subsequent iteration the particular reinforcement learning agent takes as an input state the test response generation function's response from the previous iteration in order to determine the output action to produce.

In some embodiments, the RL agent can also be appropriately updated, in each iteration, based on the response produced by the test response generation function (however this is not necessary in order to perform the synthetic testing). In this way, the RL agent also learns the behaviour functions of the one or more synthetic test users, which is likely to further improve the ability of the RL agent to adapt to new user behaviours.

In these embodiments, the synthetic testing can be considered to use a variation on a warm start approach by using the synthetic training data as warm start data. In a conventional warm start approach, before a RL agent is used it is first updated based on action/response/reward data from previous real users, and thus when the RL agent starts acting on new real users it will have some pre-existing knowledge about how it should act. In the present case, the training data from the synthetic user models has already been used to train the RL agent on synthetic users, and hence the previous synthetic training acts as a warm start procedure for the synthetic testing. A warm start can therefore be applied even before a RL agent is used with real users. This shortens the time required to test an RL agent, and increases the likelihood of the RL agent providing good actions from the start when used with real users.

Following the synthetic testing step, the trained reinforcement learning algorithm is then evaluated using one or more of the determined reward values. This gives a guide as to how the RL agent would be expected to perform when faced with new user behaviours (e.g. from a range of real users). In particular, this can give a guide as to the expected speed of convergence of the RL agent and the stability of the RL agent. Various evaluation methods are envisaged and are within the scope of the present disclosure. For example, evaluating could comprise determining one or more of: a reward value for the final iteration; an average reward value for a plurality of iterations; a cumulative reward value for a plurality of iterations; a weighted cumulative reward value for a plurality of interactions; and an average percentage increase in reward value per iteration. A plurality of iterations could be, for example, all iterations or the final N iterations. Evaluating could also comprise, for example, the percentage of iterations for which the reward value was over a threshold reward value, or the number of iterations after which the reward value was consistently over a threshold (for at least a certain number of iterations in a row).

Similarly to the training step, the testing stage can be carried out for multiple different synthetic test users. By evaluating the performance of the trained RL agent at learning from and adapting to multiple new synthetic user behaviours, this increases the reliability of the assessment of how the RL agent is expected to perform when faced with new user behaviours (e.g. from a range of real users).

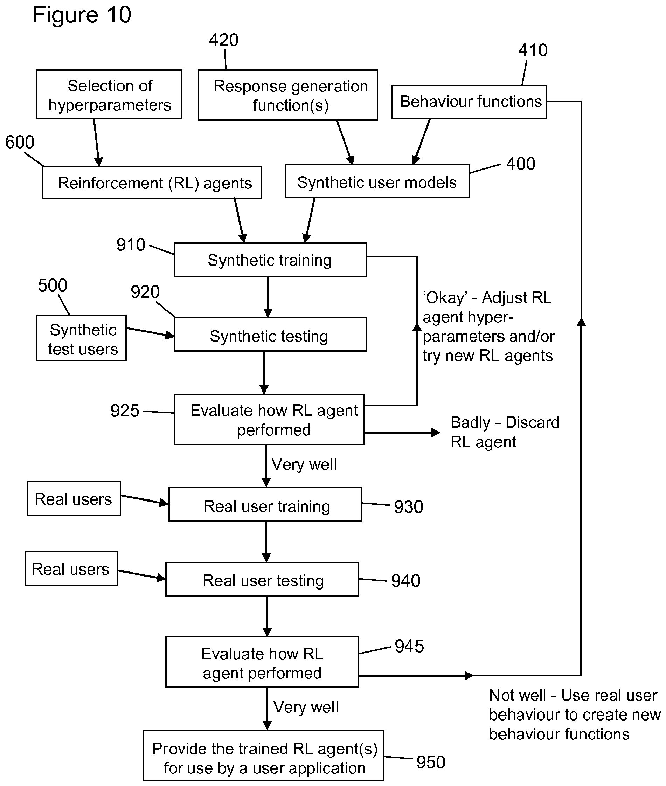

Following the evaluation step, it may be determined that the RL agent performed very well when tested on the STUs and that it appears suitable for the particular scenario. For example, the RL agent may produce a high average reward value after a small number of iterations. The suitable and well-trained RL agent could then be considered for training and/or testing on real users (as discussed below and as shown in Figure 10).

In other cases, the RL agent may perform very badly on the STUs (e.g. it may take hundreds of iterations to achieve a decent reward value). If the behaviour functions of the SUMs and STUs are strongly expected to be plausible, then this indicates that the RL agent is unlikely to perform well when it encounters users with new behaviour functions, and that it may not be suitable for the particular scenario.

However in many cases, the RL agent may perform 'well' and appear to be potentially suitable, subject to some adjustments/refinements. For example, the RL agent may produce a good average reward value after a small number of iterations, or it may produce a high average reward value for most STUs but a low average reward value for a small number of STUs. In such cases, the RL agent can be adjusted (e.g. some hyperparameters can be adjusted), then retrained on SUMs, retested on STU, and further adjusted as necessary, until a sufficiently successful RL agent can be trained.

In some example embodiments, synthetic training (and optionally synthetic testing) can be carried out for a plurality of different reinforcement learning agents. The performance/suitability of multiple RL agents (adjusted as necessary per with the previous paragraph) for the particular scenario can then be compared. One preferred or 'most suitable' RL agent (or a small number of most preferred RL agents) can be found, and provided for use by a user application. In some embodiments, the preferred RL agents can be trained and/or tested on one or more real users prior to provision to the user application.

### Real user training and testing

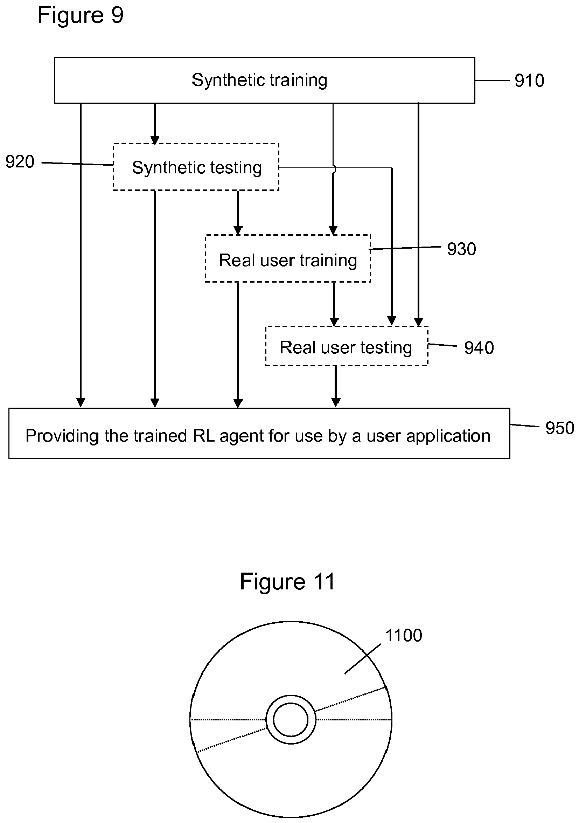

Figure 9 illustrates a method of training and testing a RL agent using both synthetic users and real users, in accordance with an example embodiment of the present disclosure. As discussed above, synthetic training 910 is used to train a reinforcement learning agent to learn the user behaviour of one or more synthetic user models. Following synthetic training, the trained RL agent is provided for use by a user application 950.

Between the synthetic training 910 and provision of the RL agent for use 950, synthetic testing 920 can be used to test/evaluate the performance of the synthetically-trained RL agent at adapting to the new user behaviour of one or more synthetic test users. Synthetic testing 920 is optional, as shown by the dotted lines in Figure 9. In some example embodiments synthetic testing is not be performed, for example if the RL agent is known from previous experiments to be highly suitable or if the developer is confident that the behaviour function(s) used in synthetic training is very close to being correct. Regardless of whether a RL agent has been synthetically tested, the synthetically trained RL agent can be trained and/or tested on real users.

Once this synthetic training (and optionally synthetic testing) have been completed, the RL agent can be trained and/or tested on real users. Real user training 930 and real user testing 940 are both optional, as shown by the dotted lines in Figure 9, and in some embodiments, synthetic training (and optionally synthetic testing) can be performed without subsequently performing real user training and/or real user testing. For example, if the RL agent is already known to be highly suitable (e.g. if it has been used for similar scenarios previously) or if the developer is confident that the behaviour function(s) used in synthetic testing are very close to being correct.

Real user training 930 comprises the same steps as the synthetic training described above, other than that the response is produced by a real user rather than a response generation function and behaviour function of an SUM. Real user training allows an RL agent to learn from real user behaviours rather than just the synthetic behaviour function(s) specified for the one or more synthetic user models.

In a similar manner as described above for synthetic user testing, the real user training can be considered to use a variation on a warm start approach by using the synthetic training data (and optionally synthetic testing data) as warm start data. The training data from the synthetic user models has already been used to train the RL agent on synthetic users hence the previous synthetic training acts as a warm start procedure for the real user training. If synthetic testing has been performed and if the RL agent was updated during synthetic testing, then synthetic testing also acts as a warm start procedure. This further shortens the time required to test the RL agent, and increases the likelihood of the RL agent providing good actions from the start when used with real users.

Real user testing 940 comprises the same steps as the synthetic testing described above, other than that the response is produced by a real user rather than a test response generation function and test behaviour function of an STU. Real user testing allows evaluation of the performance of a (synthetically and/ or real-user) trained RL agent at adapting to new real user behaviours rather than just the synthetic behaviour function(s) specified for the one or more synthetic test users.

In some embodiments, the RL agent can also be appropriately updated, in each iteration, based on the response produced by the real user (however this is not necessary in order to perform the real user testing). In this way, the RL agent also learns the behaviour functions of the one or more real users upon whom the RL agent is being testing, further improving the ability of the RL agent to adapt to new user behaviours. In these embodiments, the real user testing can be considered to use a variation on a warm start approach (similarly to the synthetic testing and the real user training). The training data from the synthetic user models has already been used to train the RL agent on synthetic users, and hence the previous synthetic training acts as a warm start procedure for the real user testing. If synthetic testing has been performed and if the RL agent was updated during synthetic testing, then testing data from the synthetic test users can also be considered as warm start data, as can training data from real user training if performed. This further shortens the time required to test an RL agent, and increases the likelihood of the RL agent providing good actions from the start when used with real users. In some embodiments, the real user data may be more heavily weighted than the synthetic user data.

As mentioned above, in some embodiments multiple RL agents are synthetically trained (and optionally synthetically tested). Multiple RL agents can also be trained and/or tested on real users. However, it could sometimes be useful (e.g for financial or time reasons) for only RL agents which were sufficiently successful at the synthetic training/testing stage to reach the training and/or testing on real users. That is, multiple RL agents may be synthetically trained (and optionally synthetically tested) but only one (or a small number of) sufficiently successful RL agent(s) may be carried forward to the real user stages. Figure 10 illustrates a method of training and testing multiple RL agents using synthetic users and real users according to such an example embodiment. Some RL agents may be synthetically trained 910 and tested 920, determined to perform very badly on synthetic test users 925 and filtered out from training/testing on real users 930, 940. Other RL agents may be determined to perform 'okay'/'well' but not 'very well'. These RL agents may have to potential to perform very well, but they require adjustments to their hyperparameters before they can be synthetically retrained on 910 and retested 920. This evaluation and filtering decreases the amount of testing that has to be done using real users, allowing real user training/testing 930, 940 to focus on the preferred/sufficiently successful RL agents to determine whether or not they are equally successful on real user behaviours.

In many embodiments, a RL agent which is carried forward to real user training 930 and/or testing 940 will perform well in the real user training and/or testing, and the RL agent(s) can be provided to a user application 950 with some confidence as to its expected behaviour when it encounters new user behaviours. However sometimes a RL agent may by determined to perform poorly in real user testing 945, despite performing well in synthetic testing. This may indicate that the real user behaviour functions were significantly different from the synthetic user behaviour functions on which the RL agent was trained. In such a case, real user behaviour as observed from the real user training and/or testing can be used to create new synthetic user behaviour functions and repeat the synthetic training/testing steps.

The present disclosure allows a developer to, when considering a particular scenario, choose a RL agent which has already been synthetically trained on at least one, and sometimes a range of, user behaviours. The developer can choose a particular trained RL agent with some knowledge about its how it should perform when it encounters new user behaviours. The developer can choose a RL agent which is likely to perform better than other considered RL agents. The developer can choose an RL agent which is likely to take reasonable actions from the beginning of interactions with a user. The developer can identify a well-performing set of hyperparameters for a RL agent.

Whilst various features of the present disclosure have been described in relation to a digital health coach application providing a daily activity target, it will be appreciated that these features are equally applicable to other scenarios. For example, a digital health coach application may use an RL agent to learn at what time of day it should present a reminder to exercise in order for the reminder to be most effective or to learn what reminder wording is most effective.

As another example, a performance optimization application on an electronic device (e.g. a mobile phone) may use a RL agent to predict which electronic device applications a user is likely to use at a given time. The RL agent can then perform the action of providing quick links to these applications on the electronic device's home screen shortly before the given time. When a user provides the response of opening an application, the time between when the user begins an interaction with the device in order to open an application and when the user actually clicks on an application icon can be determined. The RL agent can seek to minimize this time (or conversely, to maximize the inverse of this time as the 'reward'). If the RL agent accurately predicts which application a user will open (e.g. a traffic update application shortly before travelling to and from work, or a social media application during the user's lunch break), then the user can use the quick links to open the application more quickly, whereas if the RL agent does not make an accurate prediction, the user may have to click/scroll through multiple screens before reaching the application they wish to open. Accurate predictions by a RL agent can improve user satisfaction with the electronic device, as well as potentially decreasing application loading times (by pre-loading an application shortly before it is expected to be used) and increasing the battery life (by closing down applications or background processes for applications which are not expected to be used for some time.)

Whilst various features of the present disclosure have been described in relation to human user actions/behaviour (e.g. using synthetic user models which give an approximation of a real human user), it will be appreciated that these features are equally applicable to scenarios involving non-human actions/behaviours. These features may be applicable to any complex system involving actions/behaviours that are not fully deterministic. For example, a RL agent could be trained, per the present disclosure, to learn the behaviour of an apparatus, system or machine. In some embodiments, an RL agent could be trained to learn the behaviour of a traffic management system which controls traffic light signals. In other embodiments, a RL agent could be trained to learn the behaviour of an industrial control system which sets parameters for industrial machinery (e.g. for rolling sheet metal or manufacturing chemical compounds). In further embodiments, a RL agent could be trained to learn the behaviour of an online chatbot.

Figure 11 shows an example computer-readable medium comprising a computer program configured to perform, control or enable the method of Figure 7 or any method described herein. The computer program may comprise computer code configured to perform the method(s). In this example, the computer/processor readable medium 1100 is a disc such as a digital versatile disc (DVD) or a compact disc (CD). In other examples, the computer/processor readable medium 1100 may be any medium that has been programmed in such a way as to carry out an inventive function. The computer/processor readable medium 1100 may be a removable memory device such as a memory stick or memory card (SD, mini SD, micro SD or nano SD card). In some example embodiments, the computer/processor readable medium 1100 can be a non-transitory computer readable medium.

It will be appreciated to the skilled reader that any mentioned apparatus/device and/or other features of particular mentioned apparatus/device may be provided by apparatus arranged such that they become configured to carry out the desired operations when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some examples, a particular mentioned apparatus/device may be pre-programmed with the appropriate software to carry out desired operations, and wherein the appropriate software can be enabled for use by a user downloading a "key", for example, to unlock/enable the software and its associated functionality Such examples can allow a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

It will be appreciated that the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and/or processor(s), such as a microprocessor(s) or a portion of a microprocessor(s), that requires software (e.g. firmware) for operation, but the software may not be present when it is not needed for operation.

This definition of circuitry applies to all uses of this term in this application, including in the claims. As a further example, as used in this application the term circuitry also covers and implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed examples may consist of any such individual feature or combination of features. In view of the foregoing description it will be evident to a person skilled in the art that various modifications may be made within the scope of the disclosure.

While there have been shown and described and pointed out fundamental novel features as applied to different examples thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or example may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A computer-implemented method comprising:
training a particular reinforcement learning agent using one or more synthetic user models, each of the one or more synthetic user models comprising a behaviour function and a response generation function, wherein
- a reinforcement learning agent is configured to produce an output action based on an input state to the reinforcement learning agent,
- a behaviour function is configured to model a response to different output actions produced by a reinforcement learning agent, and
- a response generation function is configured to use a behaviour function to generate a response to an output action produced by a reinforcement learning agent, and
wherein the training comprises, for each of the one or more synthetic user models:
- the particular reinforcement learning agent producing an output action based on a current input state,
- the response generation function of the synthetic user model using the behaviour function of the synthetic user model to generate a response to the output action,
- appropriately updating the particular reinforcement learning agent based on the response, and
- iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

2. The method of Claim 1, further comprising:
following the training, testing the particular reinforcement learning agent using one more synthetic test users, each of the one or more synthetic test users comprising a test behaviour function and a test response generation function,
wherein the testing comprises, for each of the one or more synthetic test users:
- the particular reinforcement learning agent producing an output action based on a current input state,
- the test response generation function of the synthetic test user using the test behaviour function of the synthetic test user to generate a response to the output action,
- determining a reward value resulting from the response to the output action, and
- iteratively repeating the producing an output action, generating a response and determining a reward value steps, wherein for each subsequent iteration the particular reinforcement learning agent takes as an input state the test response generation function's response from the previous iteration in order to determine the output action to produce, and
evaluating the particular reinforcement learning agent using one or more of the determined reward values.

3. The method of Claim 1 or Claim 2, further comprising
following the training on one or more synthetic user models and, when dependent on Claim 2, following the testing on one or more synthetic test users,
further training the particular reinforcement learning agent using one or more real users by, for each of the one or more real users:
- the particular reinforcement learning agent producing an output action based on a current input state,
- the real user producing a response to the output action,
- appropriately updating the reinforcement learning agent based on the user's response, and
- iteratively repeating the producing an output action, producing a response, and updating the particular reinforcement learning agent steps, wherein for each subsequent iteration the particular reinforcement learning agent takes as an input state the real user's response from the previous iteration in order to determine the output action to produce.

4. The method of Claim 1, Claim 2 or Claim 3, further comprising
following the training on one or more synthetic user models and, when dependent on Claim 2, following the testing on one or more synthetic test users, and, when dependent on Claim 3, following the training on one or more real users,
testing the particular reinforcement learning agent using one or more real users by, for each of the one or more real users:
- the particular reinforcement learning agent producing an output action based on a current input state,
- the real user producing a response to the output action,
- determining a reward value resulting from the real user's response,
- iteratively repeating the producing an output action, producing a response and determining a reward value steps, wherein for each subsequent iteration the particular reinforcement learning agent takes as an input state the real user's response from the previous iteration in order to determine the output action to produce; and
evaluating the particular reinforcement learning agent using one or more of the determined reward values.

5. The method of Claim 2 or Claim 4, wherein testing the particular reinforcement learning agent using, for Claim 2, one or more synthetic test users or, for Claim 4, one or more real users further comprises:
appropriately updating the reinforcement learning agent based on, for Claim 2, the response generated by the test response generation function or, for Claim 4, the real user's response, and
wherein the iteratively repeating step includes iteratively repeating the updating the reinforcement learning agent step.

6. The method of Claim 2 or Claim 4, wherein evaluating the reinforcement learning agent comprises determining one or more of: a reward value for the final iteration; an average reward value over a plurality of iterations; a cumulative reward value for a plurality of iterations; a weighted cumulative reward value for a plurality of iterations; an average percentage increase in reward value per iteration; the percentage of iterations for which the reward value was over a threshold reward value; and the number of iterations after which the reward value was over a threshold for at least a certain number of iterations in a row.

7. The method of any of Claims 2-6, further comprising:
training a plurality of reinforcement learning agents in accordance with Claim 1;
testing and evaluating the plurality of reinforcement learning agents in accordance with Claim 2 or Claim 4; and
determining at least one preferred reinforcement learning agent,
wherein providing the particular trained reinforcement learning agent for use by a user application comprises providing the determined at least one preferred reinforcement learning agent.

8. The method of any preceding claim, wherein the response generation function comprises a mapping between a control variable and a response variable,
wherein training the reinforcement learning agent further comprises converting the output action produced by the reinforcement learning agent in a control variable value using the behaviour function; and
wherein the response generation function uses the control variable value and the mapping to determine the response generated.

9. The method of any preceding claim, wherein the one or more synthetic user models comprise at least two synthetic user models, and the at least two synthetic user models comprise:
the same response generation function and different respective behaviour functions, or
the same response generation function and the same behaviour function, the response generation function having different parameters for the respective synthetic user models.

10. The method of any preceding claim, wherein the particular reinforcement learning agent is for use in a digital health setting of the user application.

11. The method of any preceding claim, wherein the particular reinforcement learning agent is for use with an electronic device to learn which applications a user is likely to use on the electronic device at a given time.

12. An apparatus comprising means for performing:
training a particular reinforcement learning agent using one or more synthetic user models, each of the one or more synthetic user models comprising a behaviour function and a response generation function, wherein
- a reinforcement learning agent is configured to produce an output action based on an input state to the reinforcement learning agent,
- a behaviour function is configured to model a response to different output actions produced by a reinforcement learning agent, and
- a response generation function is configured to use a behaviour function to generate a response to an output action produced by a reinforcement learning agent, and
wherein the training comprises, for each of the one or more synthetic user models:
- the particular reinforcement learning agent producing an output action based on a current input state;
- the response generation function of the synthetic user model using the behaviour function of the synthetic user model to generate a response to the output action;
- appropriately updating the particular reinforcement learning agent based on the response; and
- iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.

13. The apparatus of Claim 12, wherein the means comprise:
at least one processor; and
at least one memory including computer program code;
the at least one memory and the computer program code configured to, with the at least one processor, cause the performance of the apparatus.

14. A computer-readable medium having stored thereon computer program code configured to, when run on at least one processor, cause an apparatus or system to perform:
training a particular reinforcement learning agent using one or more synthetic user models, each of the one or more synthetic user models comprising a behaviour function and a response generation function, wherein
- a reinforcement learning agent is configured to produce an output action based on an input state to the reinforcement learning agent,
- a behaviour function is configured to model a response to different output actions produced by a reinforcement learning agent, and
- a response generation function is configured to use a behaviour function to generate a response to an output action produced by a reinforcement learning agent, and
wherein the training comprises, for each of the one or more synthetic user models:
- the particular reinforcement learning agent producing an output action based on a current input state;
- the response generation function of the synthetic user model using the behaviour function of the synthetic user model to generate a response to the output action;
- appropriately updating the particular reinforcement learning agent based on the response; and
- iteratively repeating the producing an output action, generating a response and updating the particular reinforcement learning agent steps, wherein for each subsequent iteration the particular reinforcement learning agent takes as an input state the response generation function's response from the previous iteration in order to determine the output action to produce; and
providing the particular trained reinforcement learning agent as an output for use by a user application.
